# EUROPEAN PATENT APPLICATION

(11) **EP 1 575 251 A1**
(43) Date of publication of application: **14.09.2005**
(21) Application number: 04360027.9
(22) Date of filing: 10.03.2004
(51) Int. Cl.: H04M 3/24, H04Q 11/04

(54) **Interception module and monitoring centre for ISDN**

(71) Applicant: ALCATEL, 75008 Paris (FR)
(72) Inventor: Aschrafi, Bagher, 73240 Wendingen (DE); Rauschnabel, Fritz, 70733 Esslingen (DE)
(74) Representative: Kohler Schmid Möbus

(57) **Abstract**

This invention relates to an interception module (10), in particular for monitoring traffic of an ISDN network, comprising installing means comprising two inputs (13) and two outputs (14), being designed to connect the interception module10 to a telecommunication line (2), preferably an ISDN or an ISDN-DSL line, a converter (15) interconnected between the two inputs (13) and the two outputs (14) for generating an internal four wire ISDN connection and a wireless transmission interface (5), being designed to establish a wireless connection to a remote monitoring centre and to send data traffic signals transmitted on said telecommunication line (2) to said remote monitoring centre (20), using said wireless connection. Furthermore it is comprising a control unit (16), being designed for remote controlling and/or configuring the interception module (10) according to instructions of the remote monitoring centre.

## Description

This invention relates to an interception module, in particular for monitoring traffic of an Integrated Service Digital Network (ISDN). The interception module is comprising installing means comprising two inputs and two outputs, being designed to connect the interception module to a telecommunication line, preferably an ISDN or an ISDN-DSL line and a converter interconnected between the two inputs and the two outputs for generating an internal four wire ISDN connection. Such interception modules are used for keeping a telecommunication line under surveillance, i.e. for tapping the telecommunication line.

In the European patent application EP 1 385 352 A1 an interception module for monitoring data traffic of an ISDN network is described. This interception module for ISDN lines is comprising two input-/output connections for connecting the interception module to an external two wire ISDN- or Digital Subscriber Line (DSL) -ISDN-connection using so called Uₖ₀- and/or U-Interfaces. Furthermore, the interception module is comprising preferably two converters being connected between said two input-/output connections (inputs/outputs) for generating an internal four wire ISDN-connection and a demultiplexing module having four input connections to be connected to the four wire ISDN-connection and being designed to make available a channel to be tapped. The ISDN interception module or unit is integrated into the ISDN network itself.

Disadvantageously, the known interception module has to be connected to a monitoring device or centre by a cable wire connection being connected to the four wire ISDN-connection to tap the channel which is made available by the interception module. This so called local interception is very expensive and complicated.

It is therefore an object of the invention to provide an interception module and a monitoring centre and a method for monitoring traffic of an ISDN network which overcome the problems associated with the related art, in particular which avoid the necessity to connect an ISDN interception module to a monitoring centre using a cable wire connection.

The object concerning the interception module is attained by the interception module defined in claim 1. The object concerning a monitoring centre is attained by the monitoring centre according to claim 5 and the object concerning the method for monitoring traffic is attained by the method according to claim 9.

Further advantageous features of the invention are defined in the depending claims.

The inventive interception module, in particular for monitoring traffic of an ISDN network, is comprising:
- installing means comprising two inputs and two outputs, being designed to connect the interception module to a telecommunication line, preferably an ISDN or an ISDN-DSL line and
- a converter interconnected between the two inputs and the two outputs for generating an internal four wire ISDN connection.
   According to the invention the interception module furthermore is comprising a wireless transmission interface, being designed to establish a wireless connection to a remote monitoring centre and to send data traffic signals transmitted on said telecommunication line to said remote monitoring centre, using said wireless connection and a control unit, being designed for remote controlling and/or configuring the interception module according to instructions of the remote monitoring centre.

The inventive interception module results at least in the following advantages:
- A more flexible control and supervision is made available, because of the possibility of remote monitoring the data traffic of the tapped telecommunication line.
- An automation and centralizing of the monitoring of traffic of an ISDN network is made possible.

Preferably, said wireless transmission interface is comprising a broadband transmission interface, preferably an UMTS interface. Therefore, a fast data transmission between the inventive interception module and a remote monitoring centre is possible.

Advantageously, said control unit of the inventive interception module is comprising a programmable Application Specific Integrated Circuit (ASIC). The ASIC circuit is designed to perform the controlling and to establish the transmitting of the data traffic signals from the interception module to the remote monitoring centre. To use an ASIC for the controlling is the cheapest way to implement the inventive interception module and the inventive method described below.

In another preferred embodiment of the invention said converter is being designed to separate said data traffic signals transmitted on said telecommunication line according to their direction. In a two wire ISDN connection data traffic being transmitted from a first terminal to a second terminal (first direction) and from the second terminal to the first terminal (second direction) is transmitted on one wire. The second wire is used to transmit control signals. In a four wire ISDN connection on a first wire (channel) signals defining the data transmission frequency are transmitted. On a second wire control signals are transmitted, so called D-Channel. The third and the fourth wire, so called B-Channels, are used to transmit data signals containing the information to be transmitted from the first to the second terminal and vice versa, each having the data load of one transmission direction on. Each terminal performs a conversion of the described four wire data transmission scheme to the described two wire transmission scheme. To retrieve the information transmitted by a two wire connection a conversion into the transmission scheme of a four wire connection has to be performed. Advantageously in this preferred embodiment the signals containing the transmitted information are retrieved by the interception module, so the information can be transmitted to a remote control centre using any transmission protocol usable by a wireless connection.

The inventive remote monitoring centre (RMC), in particular for monitoring traffic of an ISDN network, is comprising:
- a wireless transmission interface, being designed to establish a wireless connection to an interception module,
- analysing means, being designed to analyse data traffic signals received from said interception module, preferably according to whether said data traffic signals are comprising voice data or other data,
- a control module, being designed for remote controlling and/or configuring said interception module and
- a data base interface to a, preferably local, data base.
   The inventive remote monitoring centre may be mobile, for example the remote monitoring centre may be installed in a car. The inventive remote monitoring centre is to be used to receive the data traffic signals send by the inventive interception module and to send instructions to the interception module. Therefor it makes available the advantages of the inventive interception module. Furthermore the received data can be saved in said data base. The received data can be analysed immediately by the aid of the data base. If the monitoring centre is mobile preferably a local data base is used.

Preferably said wireless transmission interface is comprising a broadband transmission interface, preferably an UMTS interface. Therefore, a fast data transmission between the inventive interception module and the remote monitoring centre is possible.

Preferably said control module of the inventive remote monitoring centre is comprising a programmable ASIC. The ASIC circuit is designed to control communication with the ASIC circuit of the inventive interception module to perform the controlling and to establish the transmitting of the data traffic signals from the interception module to the remote monitoring centre. To use an ASIC for this object is the cheapest way to implement the inventive method described below.

Advantageously, an interception system, in particular for monitoring traffic of an ISDN network, comprising at least one inventive interception module and at least one inventive remote monitoring centre is used to tap an ISDN telephone line. Therefore the advantages of the invention are made available.

According to the invention an inventive method for monitoring traffic of an ISDN network is comprising the steps of:
- assigning a phone number of an inventive remote monitoring centre to an inventive interception module being connected to a telecommunication line of an ISDN Network,
- configuring said interception module by submitting instructions from said remote monitoring centre to the control unit of said interception module,
- keeping said telecommunication line under surveillance by recognising whether data traffic signals are transmitted by said telecommunication line, establishing a wireless connection between said interception module and said remote monitoring centre, and transmitting said data traffic signals from said interception module to said remote monitoring centre by using the wireless transmission interfaces,
- analysing said data traffic signals by the analysing means of said remote monitoring centre and
- storing at least parts of said data traffic signals and/or information data retrieved from said data traffic signals in a local and/or central data base using the data base interface of said remote monitoring centre.
   The inventive method is to be used for monitoring traffic of an ISDN network, in particular to tap a telephone line of the network using the inventive interception module. Therefore, it provides the advantages of the inventive interception module.

In a further very advantageous embodiment of the invention said interception module and/or said remote monitoring centre of the inventive interception system is comprising at least one microcomputer loaded with a computer program with software code sections by which the steps according to the inventive method are carried out. To implement the inventive method as a computer program is the most appropriate way to achieve the advantages of the inventive method.

The different features of the preferred embodiments of the invention may be used in combination together with the invention as set forth in the independent claims or just each single preferred embodiment together with the invention as set forth in the independent claims.

The embodiments of the invention will now be described with reference to the accompanying drawings.
In fig. 1 the inventive interception module is shown schematically.
In fig. 2 the inventive remote monitoring centre is shown schematically by the aid of function blocks.
In fig. 3 an interception system comprising inventive interception modules and inventive remote monitoring centres is shown schematically.

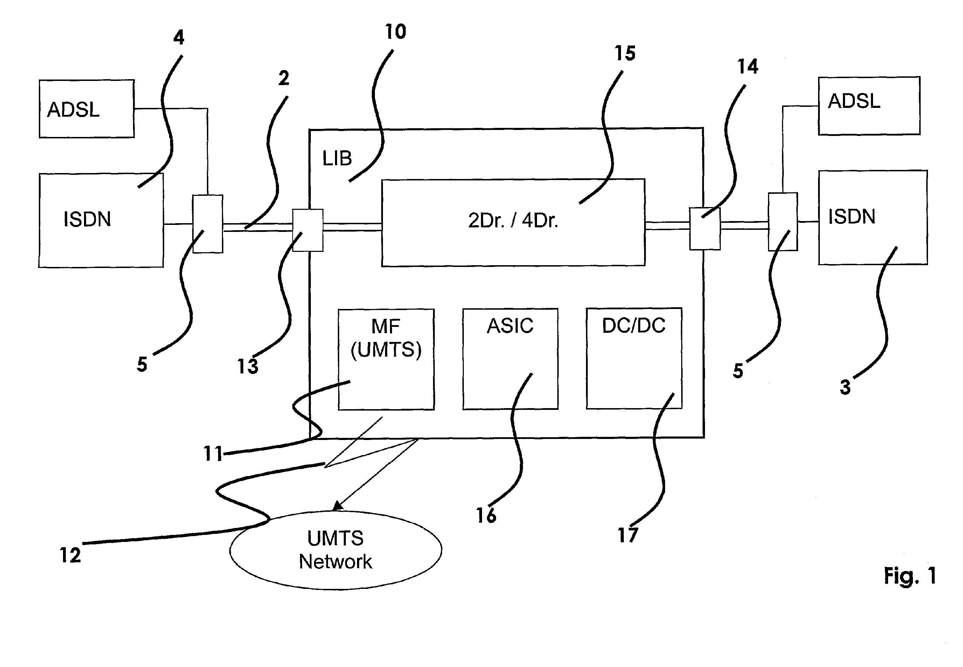

In fig. 1 the inventive interception module 10, also called Locale Interception Box (LIB), to be installed in an ISDN network between a telephone line is shown. The telephone line is a two wire ISDN connection 2 between an ISDN Network Termination (NT) 3 and an ISDN Line Termination (LT) 4. Furthermore there are two User Interfaces (u IF) 5 connected between the telephone line. Each of them may be an Interface to a users terminal of different kinds, e.g. an ISDN terminal of type 4B/3T or 2B/1Q, an Asymmetric DSL (ADSL) also called live ISDN terminal or terminals of the type E1 or T1. The first u IF is connected to an ADSL Line Termination (ADSL LT) and the second u IF is connected to an ADSL Modem. The LIB is comprising a wireless transmission interface 11, in particular an UMTS interface (MF), for establishing a wireless UMTS connection 12 to a remote monitoring centre via an UMTS network and installing means comprising two inputs 13 and two outputs 14 for connecting the interception module with the two wire (2Dr.) telecommunication line, e.g. an ISDN or ISDN-DSL line. Furthermore the interception module is comprising a converter 15 for direction separation, interconnected between the two inputs 13 and the two outputs 14 for generating an internal four wire (4Dr.) ISDN connection and a control unit 16, in particular an ASIC, for remote controlling and/or configuring the interception module by means of the remote monitoring centre. The interception module is supplied with electrical power by a direct current source (DC/DC) 17, e.g. a battery, an accumulator, which may be loaded by remote loading or a direct current network.

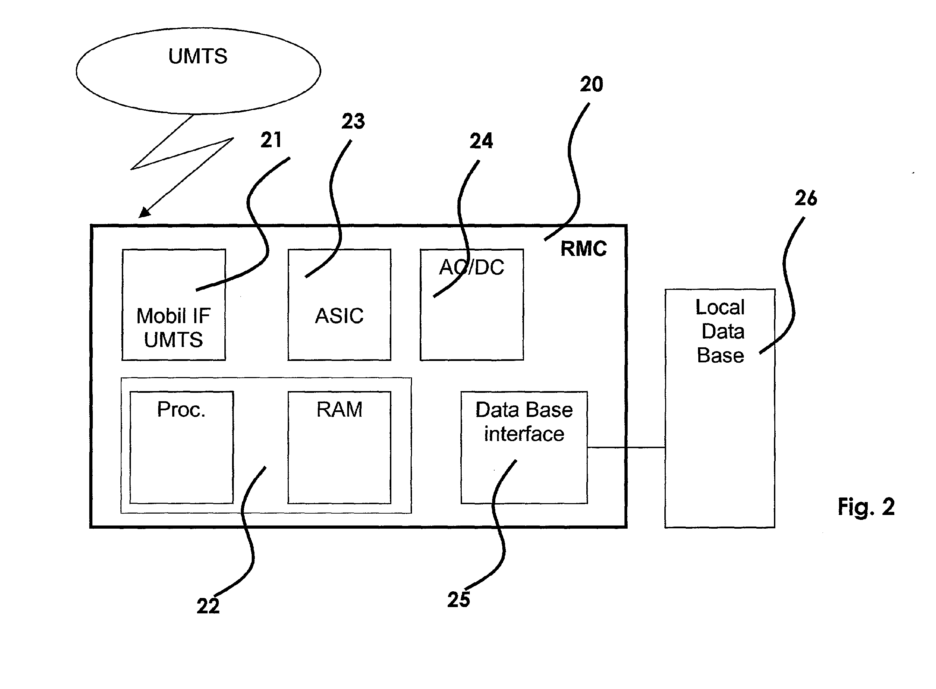

The inventive remote monitoring centre 20 shown in fig. 2 is comprising a wireless transmission interface 21, in particular an UMTS interface, for establishing a wireless UMTS connection to an interception module via an UMTS network and analysing means 22, being designed to analyse the data traffic received from the interception module, e.g. whether the data traffic is comprising voice and/or other data signals. The analysing means are comprising a microprocessor and a memory (RAM). Furthermore the RMC is comprising a control module 23, in particular an ASIC, for remotely controlling and/or configuring an interception module and an interface 25 to a local data base 26. The RMC is supplied with electrical power by a direct current or an alternating current source (AC/DC) 24.

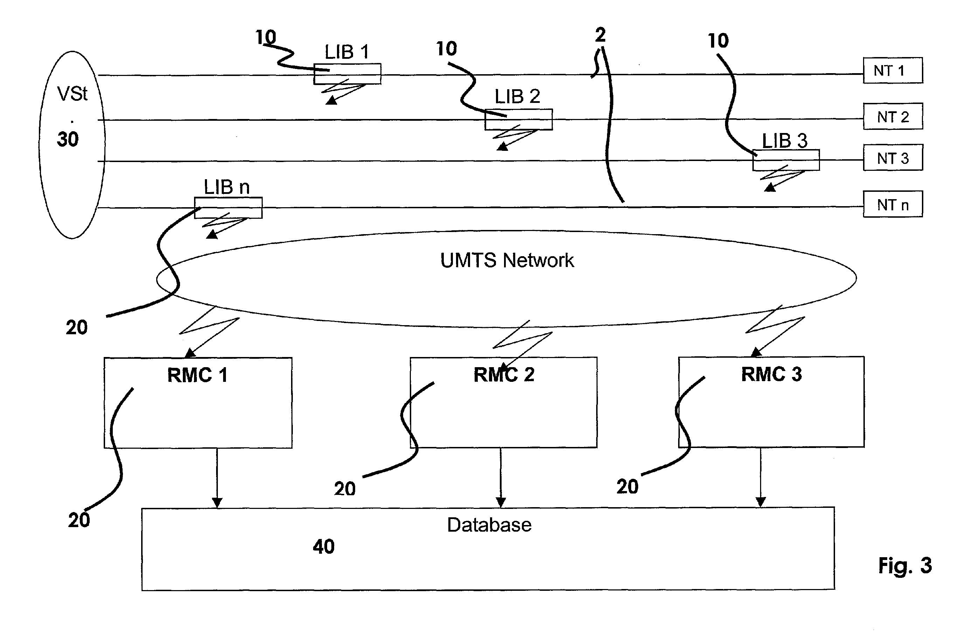

In fig. 3 an interception system comprising inventive interception modules (LIB 1, LIB2, LIB3, LIB n)10 and inventive remote monitoring centres (RMC1, RMC2, RMC3) 20 is shown schematically. The interception modules are installed between telephone lines 2, each connecting a telecommunication switch (VSt.) 30 to a Network Termination module (NT1, NT2, NT3, NTn). Each interception module is connected wireless via an UMTS Network to at least one RMC. Each RMC possibly is connected wireless to more than one interception module. The remote monitoring centres are connected to a central database 40.

The data signals of the internal four wire ISDN connection generated by each interception module, meaning the B-channels, each being a 2*64Kilobit-channel and the D-Channel, transmitting control signals in both directions are transmitted via a wireless UMTS connection to at least one, preferably mobile, RMC. The inventive method for monitoring traffic of an ISDN network, i.e. for tapping an ISDN telephone line may comprise the following steps:
- At least one interception module (LIB) according to the invention is installed in the ISDN network.
- A phone number of a RMC is assigned to the LIB, e.g. in the figure LIB1 has the phone number of RMC1 assigned to, LIB2 and LIB 3 are having the phone number of RMC2 assigned to etc.
- The LIB is being configured, which may be done local, meaning by inputting instructions into the LIB itself or using an RMC for inputting instructions. For example the LIB is configured to survey incoming calls, outgoing calls, incoming calls and outgoing calls, calls from or to a specific phone number or even to survey permanently.
- After that the LIB keeps the telephone line , meaning the data traffic of a customer to be tapped, under surveillance.
   If incoming or outgoing calls are detected by the interception module, the interception module establishes an UMTS connection to the RMC which has the phone number the interception module has assigned to. For each ISDN B-Channel kept under surveillance 128 Kilobit transmission capacity are necessary. Using the established UMTS connection control signals and Data signals, containing the Information the tapped customer transmits, e.g. speech data or other data, are transmitted separated according their direction using a broadband wireless connection to the RMC. The RMC stores the data in a local database and hands the data over to a central data base. If no relevant data is transmitted using the tapped connection the UMTS connection is being separated. The RMC analyses the data traffic, e.g. email and/or facsimile data, of the customer using the tapped telephone line. By changing the configuration of a LIB by assigning another phone number of another RMC the LIB transmits the data traffic signals to the other RMC. This may be done if the data traffic signals should be transmitted to different RMCs according to different days of the week, e.g. whether it is Saturday or Sunday, according to different daytimes or according to a capacity of an RMC. The controlling of the inventive method is being done by programmable ASICs, the LIB and the RMC are comprising. The UMTS connection between the LIB and the RMC is activated automatically if the LIB detects data traffic on the telephone line kept under surveillance.

## Claims

1. Interception module (10), in particular for monitoring traffic of an ISDN network, comprising
- installing means comprising two inputs (13) and two outputs (14), being designed to connect the interception module10 to a telecommunication line (2), preferably an ISDN or an ISDN-DSL line,
- a converter (15) interconnected between the two inputs (13) and the two outputs (14) for generating an internal four wire ISDN connection and
- a wireless transmission interface (5), being designed to establish a wireless connection to a remote monitoring centre (20) and to send data traffic signals transmitted on said telecommunication line (2) to said remote monitoring centre (20), using said wireless connection,
- a control unit (16), being designed for remote controlling and/or configuring the interception module (10) according to instructions of the remote monitoring centre (20).

2. Interception module according to claim 1, **characterised in that** said wireless transmission interface is comprising a broadband transmission interface, preferably an UMTS interface.

3. Interception module according to claim 1, **characterised in that** said control unit is comprising a programmable ASIC.

4. Interception module according to claim 1, **characterised in that** said converter (15) is being designed to separate said data traffic signals transmitted on said telecommunication line according to their direction.

5. Remote monitoring centre (20), in particular for monitoring traffic of an ISDN network, comprising
- a wireless transmission interface (21), being designed to establish a wireless connection to an interception module (10),
- analysing means (22), being designed to analyse data traffic signals received from said interception module, preferably according to whether said data traffic signals are comprising voice data or other data,
- a control module (23), being designed for remote controlling and/or configuring said interception module and
- a data base interface (25) to a, preferably local, data base.

6. Remote monitoring centre according to claim 5, **characterised in that** said wireless transmission interface is comprising a broadband transmission interface, preferably an UMTS interface.

7. Remote monitoring centre according to claim 5, **characterised in that** said control module is comprising a programmable ASIC.

8. Interception system, in particular for monitoring traffic of an ISDN network, comprising an interception module (10) according to claim 1 and a remote monitoring centre (20) according to claim 5.

9. A method for monitoring traffic of an ISDN network, comprising the steps of
- assigning a phone number of a remote monitoring centre according to claim 5 to an interception module according to claim 1 being connected to a telecommunication line of an ISDN Network,
- configuring said interception module by submitting instructions from said remote monitoring centre to the control unit of said interception module,
- keeping said telecommunication line under surveillance by recognising whether data traffic signals are transmitted by said telecommunication line, establishing a wireless connection between said interception module and said remote monitoring centre, and transmitting said data traffic signals from said interception module to said remote monitoring centre by using the wireless transmission interfaces,
- analysing said data traffic signals by the analysing means of said remote monitoring centre and
- storing at least parts of said data traffic signals and/or information data retrieved from said data traffic signals in a local and/or central data base using the data base interface of said remote monitoring centre.

10. The interception system according to claim 8, **characterised in that** said interception module and/or said remote monitoring centre is comprising at least one microcomputer loaded with a computer program with software code sections by which the steps according to the method according to claim 9 are carried out.
